# FASCICULE DE BREVET EUROPEEN

(11) **EP 3 308 064 B1**
(45) Date de publication et mention de la délivrance du brevet: **01.04.2020**
(21) Numéro de dépôt: 16732514.1
(22) Date de dépôt: 10.06.2016
(51) Int. Cl.: F16K 37/00, G05B 23/02

(54) **INSTALLATION ET PROCÉDÉ DE SUPERVISION DE VANNES D'UN CIRCUIT HYDRAULIQUE, CIRCUIT HYDRAULIQUE ET PRODUIT PROGRAMME D'ORDINATEUR ASSOCIÉS**
VORRICHTUNG UND VERFAHREN ZUR ÜBERWACHUNG VON VENTILEN IN EINEM HYDRAULIKKREISLAUF, ZUGEHÖRIGE HYDRAULIKSCHALTUNG UND COMPUTERPROGRAMMPRODUKT
EQUIPMENT AND METHOD FOR SUPERVISING VALVES IN A HYDRAULIC CIRCUIT, ASSOCIATED HYDRAULIC CIRCUIT AND COMPUTER PROGRAM PRODUCT

(30) Priorité: 12.06.2015 FR 1555401
(43) Date de publication de la demande: 18.04.2018
(73) Titulaire: FRAMATOME, 92400 Courbevoie (FR)
(72) Inventeur: PINET, Dominique, 78500 Sartrouville (FR); MACE, Jean Reynald, 91100 Palaiseau (FR); PERISSE, Jocelyn, 69009 Lyon (FR); DECHANET, Thierry, 38230 Charvieu-Chavagneux (FR)
(74) Mandataire: Lavoix
(86) Numéro de dépôt international: PCT/EP2016/063330
(87) Numéro de publication internationale: WO 2016/198622

(56) Documents cités:
- WO-A1-2012/101640
- JP-A- 2003 343 761
- JP-A- 2005 251 032
- JP-A- 2007 233 497
- JP-A- 2007 334 399
- US-A1- 2008 034 882
- US-A1- 2013 218 482
- US-A1- 2013 314 239
- US-A1- 2013 321 166

## Description

La présente invention concerne une installation électronique de supervision de vannes d'un circuit hydraulique, chaque vanne étant mobile entre une position ouverte et une position fermée.

L'installation comprend, une pluralité de dispositifs électroniques de détection de changement de position, chacun étant associé à une vanne respective et étant configuré pour détecter un changement de position de la vanne entre sa position ouverte et sa position fermée, un appareil électronique de supervision des vannes du circuit hydraulique, et un système de transmission radioélectrique de messages entre chaque dispositif de détection de changement de position et l'appareil de supervision.

L'invention concerne également un circuit hydraulique comprenant une pluralité de vannes et une telle installation de supervision des vannes.

L'invention concerne également un procédé de supervision des vannes d'un tel circuit hydraulique, le procédé étant mis en oeuvre par ordinateur.

L'invention concerne également un produit programme d'ordinateur comportant des instructions logicielles, qui lorsqu'elles sont exécutées par un ordinateur, mettre en œuvre un tel procédé de supervision.

L'invention concerne le domaine de la supervision de circuits hydrauliques, de préférence en environnement fermé à l'intérieur d'un bâtiment, notamment en environnement sévère, tel qu'un bâtiment de réacteur nucléaire.

On connaît du document EP 2 126 434 B1 une installation électronique de supervision du type précité. L'installation de supervision décrite dans ce document comprend une pluralité de dispositifs de contrôle de vanne, également appelée soupape, et un ou plusieurs lecteurs de dispositif à vanne pour recevoir de la part des dispositifs de contrôle de vanne des messages d'état et pour les transmettre à un serveur par une communication Ethernet. Chaque dispositif de contrôle de vanne comprend un capteur pour mesurer la position angulaire de la vanne et une unité de communication sans fil à courte portée pour transmettre un message d'état à un ou plusieurs lecteurs de dispositif à vanne, notamment en cas de détection d'un changement de la position angulaire de la vanne correspondante. Chaque message d'état comprend la position angulaire de la soupape, telle que mesurée par ledit capteur, conjointement avec une identification dudit dispositif de contrôle de vanne.

L'installation de supervision comprend également un ou plusieurs dispositifs opérateurs portatifs, chacun étant utilisé pour déclencher un dispositif de contrôle de vanne sélectionné lorsqu'il est à proximité, pour initier une communication de message d'état à courte portée de manière à recevoir, via le dispositif opérateur, ledit message d'état.

Toutefois, la supervision du circuit hydraulique effectuée à l'aide d'une telle installation n'est pas optimale, et des incidents sont susceptibles de survenir lors de manœuvres de vannes par des opérateurs.

US 2008/034882 A1 décrit également une installation électronique de supervision de vannes d'un circuit hydraulique, chaque vanne étant mobile entre une position ouverte et une position fermée.

Le but de l'invention est donc de proposer une installation et un procédé de supervision de vannes d'un circuit hydraulique, permettant d'améliorer la supervision dudit circuit hydraulique, en limitant les risques d'incident lors de manœuvres de vannes par des opérateurs.

A cet effet, l'invention a pour objet une installation électronique de supervision de vannes d'un circuit hydraulique, chaque vanne étant mobile entre une position ouverte et une position fermée, l'installation comprenant :
- une pluralité de dispositifs électroniques de détection de changement de position, chacun étant associé à une vanne respective et étant configuré pour détecter un changement de position de la vanne entre sa position ouverte et sa position fermée,
- un appareil électronique de supervision des vannes du circuit hydraulique, et
- un système de transmission radioélectrique de messages entre chaque dispositif de détection de changement de position et l'appareil de supervision,
dans laquelle l'appareil de supervision est configuré pour calculer une séquence de modifications successives de positions de vannes à partir de messages reçus des dispositifs de détection de changement de position via le système de transmission radioélectrique, pour comparer la séquence calculée avec une séquence prédéfinie et pour générer un signal en fonction de la comparaison entre la séquence calculée et la séquence prédéfinie.

L'installation de supervision permet alors de calculer la séquence des modifications successives des positions de vannes à partir des messages reçus des dispositifs de détection de changement de position, c'est-à-dire au fur et à mesure que les vannes sont manœuvrées par le ou les opérateurs, de comparer la séquence calculée avec une séquence souhaitée prédéfinie, et d'aider le ou les opérateurs en générant un signal résultant de la comparaison effectuée entre la séquence calculée et la séquence prédéfinie.

Le signal généré est un signal d'alerte. Le signal d'alerte est généré en cas de détection d'un écart entre la séquence calculée et la séquence prédéfinie, et l'opérateur, informé de cet incident via le signal d'alerte, peut alors le corriger rapidement.

Suivant d'autres aspects avantageux de l'invention, l'installation de supervision comprend une ou plusieurs des caractéristiques des revendications 2 à 12, prises isolément ou suivant toutes les combinaisons techniquement possibles.

L'invention a également pour objet un circuit hydraulique selon la revendication 13.

L'invention a également pour objet un procédé de supervision de vannes d'un circuit hydraulique selon la revendication 14.

L'invention a également pour objet un produit programme d'ordinateur selon la revendication 15.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'une une installation électronique de supervision de vannes d'un circuit hydraulique selon l'invention ;
- la figure 2 est un organigramme d'un procédé, selon l'invention, de supervision des vannes du circuit hydraulique de la figure 1.

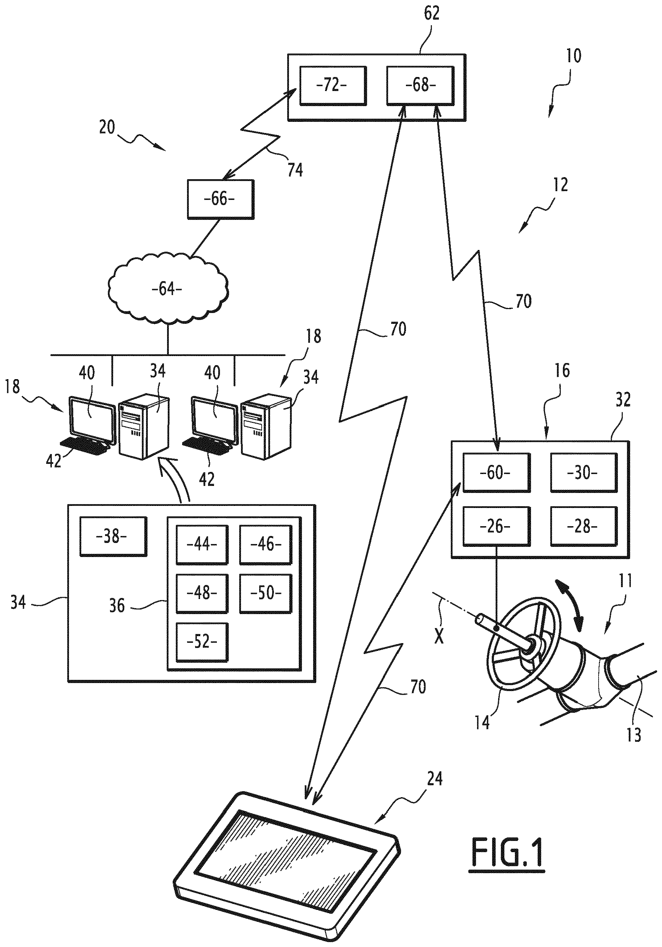

Sur la figure 1, un circuit hydraulique 10 comprend une pluralité de vannes 11 et une installation électronique 12 de supervision des vannes 11. Par souci de simplification du dessin, une seule vanne 11 est représentée sur la figure 1.

Chaque vanne 11 est associée à une canalisation 13, et est mobile entre une position ouverte correspondant à la circulation d'un fluide dans la canalisation 13 et une position fermée correspondant à l'absence de circulation du fluide dans la canalisation 13.

Chaque vanne 11 est de préférence mobile en rotation autour d'un axe de rotation X entre sa position ouverte et sa position fermée.

Chaque vanne 11 est équipée d'un volant 14 pour la manœuvrer entre ses positions ouverte et fermée.

L'installation de supervision 12 comprend plusieurs dispositifs électroniques de détection de changement de position 16, chacun étant associé à une vanne 11 respective et étant configuré pour détecter un changement de position de la vanne 11 entre sa position ouverte et sa position fermée. Sur la figure 1, un seul dispositif de détection de changement de position 16 est représenté par souci de simplification du dessin.

L'installation de supervision 12 comprend également au moins un appareil électronique 18 de supervision des vannes 11 du circuit hydraulique et un système 20 de transmission radioélectrique de messages entre chaque dispositif de détection de changement de position 16 et le ou les appareils de supervision 18. Dans l'exemple de la figure 1, l'installation de supervision 12 comprend deux appareils de supervision 18, chacun étant relié au système de transmission radioélectrique 20.

En complément facultatif, l'installation de supervision 12 comprend en outre une tablette électronique 24, destinée à être utilisée par exemple par un opérateur en charge de la manipulation des vannes 11.

En complément facultatif, l'installation de supervision 12 comprend au moins un voyant lumineux, non représenté, chaque voyant lumineux étant associé à une vanne 11 correspondante.

En variante ou en complément facultatif, l'installation de supervision 12 comprend en outre au moins un haut-parleur, non représenté, chaque haut-parleur étant associé à une vanne 11 correspondante.

Chaque dispositif de détection de changement de position 16 comporte un capteur adapté pour détecter un mouvement de la vanne 11 correspondante, entre sa position ouverte et sa position fermée. Le capteur est par exemple un accéléromètre 26 adapté pour détecter une accélération angulaire de la vanne 11 autour de l'axe de rotation X.

Chaque dispositif de détection de changement de position 16 comporte en outre un module d'alimentation électrique 28 et un module de calcul 30 configuré pour déterminer un changement de position de la vanne 11 associée en fonction d'un mouvement détecté par le capteur, par exemple en fonction d'une accélération angulaire détectée par l'accéléromètre 26. De préférence, le module d'alimentation électrique 28 est configuré pour alimenter électriquement le module de calcul 30 seulement en cas de détection d'un mouvement par le capteur, par exemple seulement en cas de détection d'une accélération angulaire par l'accéléromètre 26. L'accéléromètre 26 est en complément configuré pour se réactiver régulièrement, par exemple tous les dixièmes de seconde, afin de détecter une éventuelle accélération angulaire de la vanne 11.

Chaque dispositif de détection de changement de position 16 comporte un boîtier 32 à l'intérieur duquel sont disposés le capteur, tel que l'accéléromètre 26, le module d'alimentation 28 et le module de calcul 30. Le boîtier 32 est, par exemple, fixé au volant 14 de la vanne.

Chaque appareil de supervision 18 comporte une unité de traitement d'informations 34, formée par exemple d'une mémoire 36 et d'un processeur 38 associé à la mémoire 36.

En complément facultatif, chaque appareil de supervision 18 comporte un écran d'affichage 40 et des moyens de saisie de données, tels qu'un clavier 42.

Chaque appareil de supervision 18 est configuré pour calculer une séquence de modifications successives de positions de vanne 11 à partir de messages reçus des dispositifs de détection de changement de position 16 via le système de transmission radioélectrique 20, puis pour comparer la séquence calculée avec une séquence prédéfinie, et pour générer un signal en fonction de la comparaison entre la séquence calculée et la séquence prédéfinie.

En complément facultatif, chaque appareil de supervision 18 est configuré en outre pour déterminer la vanne 11 correspondant au signal généré.

En complément facultatif encore, chaque appareil de supervision 18 est configuré en outre pour transmettre, via le système de transmission radioélectrique 20, le signal généré au dispositif de détection de changement de position 16 associé à la vanne 11 correspondant au signal.

En complément facultatif encore, lorsque l'installation de supervision 12 comprend la tablette électronique 24, chaque appareil de supervision 18 est configuré en outre pour transmettre, via le système de transmission radioélectrique 20, le signal généré à la tablette électronique 24.

En complément facultatif encore, lorsque l'installation de supervision 12 comprend au moins un voyant lumineux, chaque appareil de supervision 18 est configuré en outre pour transmettre, via le système de transmission radioélectrique 20, et au voyant lumineux associé à la vanne 11 correspondant au signal généré, un signal de commande pour la génération par ledit voyant d'un signal lumineux.

En complément facultatif encore, lorsque l'installation de supervision 12 comprend en outre au moins un haut-parleur, chaque appareil de supervision 18 est configuré en outre pour transmettre, via le système de transmission radioélectrique 20 et à destination du haut-parleur associé à la vanne 11 correspondant au signal généré, un signal de commande pour la génération par ledit haut-parleur d'un signal sonore.

A titre d'exemple, la mémoire 36 est alors apte à stocker un logiciel 44 de calcul de la séquence des modifications successives des positions des vannes 11 à partir des messages reçus des dispositifs de détection de changement de position 16 via le système de transmission radioélectrique 20. La mémoire 36 est également apte à stocker un logiciel 46 de comparaison de la séquence calculée avec la séquence prédéfinie et un logiciel 48 de génération du signal en fonction de la comparaison entre la séquence calculée et la séquence prédéfinie.

En complément facultatif, la mémoire 36 est apte à stocker un logiciel 50 de détermination de la vanne 11 correspondant au signal généré.

En complément facultatif encore, la mémoire 36 est apte à stocker un logiciel 52 de transmission, à l'aide du système de transmission radioélectrique 20, du signal généré au dispositif de détection de changement de position 16 associé à la vanne 11 correspondant au signal.

Le processeur 38 est apte à exécuter chacun des logiciels 44, 46, 48, 50, 52.

Lorsqu'exécutés par le processeur 38, le logiciel de calcul 44, le logiciel de comparaison 46, le logiciel de génération 48, et le cas échéant, le logiciel de détermination 50 et le logiciel de transmission 52 forment respectivement un module de calcul configuré pour calculer la séquence des modifications successives des positions des vannes 11 à partir des messages reçus des dispositifs de détection de changement de position, un module de comparaison configuré pour comparer la séquence calculée avec une séquence prédéfinie, un module de génération configuré pour générer le signal en fonction de la comparaison entre la séquence calculée et la séquence prédéfinie, et le cas échéant, un module de détermination configuré pour déterminer la vanne 11 correspondant au signal généré, et un module de transmission configuré pour transmettre le signal généré à l'aide du système de transmission radioélectrique 20.

En complément facultatif, le module de transmission, formé par exemple par le logiciel de transmission 52 exécuté par le processeur 38, est configuré pour transmettre le signal généré à la tablette électronique 24, et/ou pour transmettre le signal de commande au voyant lumineux associé à la vanne 11 correspondant au signal généré en vue de la génération par ledit voyant d'un signal lumineux, et/ou pour transmettre, au haut-parleur associé à la vanne 11 correspondant au signal généré, un signal de commande pour la génération par ledit haut-parleur du signal sonore.

En variante, le module de calcul, le module de comparaison, le module de génération, et le cas échéant le module de détermination et le module de transmission, sont réalisés sous forme de composants logiques programmables, tels que des FPGA (de l'anglais *Field-Programmable Gate Array*), ou encore sous forme de circuits intégrés dédiés, tels que des ASICs (de l'anglais *Application-Specific Integrated Circuit*).

Le signal généré est un signal d'alerte en cas de détection d'un écart entre la séquence calculée et la séquence prédéfinie.

En complément, un signal de manœuvre indiquant la prochaine vanne 11 à manœuvrer selon la séquence prédéfinie est généré. L'homme du métier comprendra que le module de génération est configuré pour générer un ou plusieurs signaux, à savoir le signal d'alerte et/ou le signal de manœuvre, résultant de la comparaison entre la séquence calculée et la séquence prédéfinie.

Le signal de manœuvre indique la prochaine vanne à manœuvrer selon la séquence souhaitée prédéfinie, et l'opérateur est alors informé de la prochaine vanne qu'il doit ouvrir ou fermer. La séquence souhaitée prédéfinie est également appelée alignement de vannes ou encore lignage.

Le système de transmission radioélectrique 20 comporte une pluralité de premiers modules 60 de communication radioélectrique à courte portée, chaque premier module 60 étant associé à un dispositif de détection de changement de position 16 respectif. Dans l'exemple de la figure 1, le premier module de communication 60 est disposé à l'intérieur du boîtier 32 du dispositif de détection de changement de position 16 associé.

Le système de transmission radioélectrique 20 comporte en outre au moins un dispositif 62 de retransmission radioélectrique de messages entre chaque premier module de communication radioélectrique 60 et le ou les appareils de supervision 18.

Dans l'exemple de la figure 1, les appareils de supervision 18 sont reliés chacun à un réseau 64, tel qu'un réseau local, par exemple à un réseau WLAN (de l'anglais *Wireless Local Area Network*), tel qu'un réseau conforme à la norme IEEE 802.11, c'est-à-dire un réseau Wi-Fi.

En complément facultatif, le système de transmission radioélectrique 20 comporte en outre une passerelle 66 (de l'anglais *gateway*) de communication entre le dispositif de retransmission 62 et le réseau 64.

Chaque dispositif de retransmission 62 est également appelé répéteur. Chaque dispositif de retransmission 62 comporte un deuxième module de communication radioélectrique 68 à courte portée, configuré pour communiquer avec chaque premier module de communication radioélectrique 60 via une liaison radioélectrique à courte portée 70 et un troisième module de communication radioélectrique 72 à longue portée, configuré pour communiquer avec le ou les appareils de supervision 18 via une liaison radioélectrique à longue portée 74.

En variante, le troisième module de communication radioélectrique 72 et la liaison radioélectrique 74 sont un module de communication radioélectrique à forte pénétration et une liaison radioélectrique à forte pénétration.

Par courte portée, on entend généralement une distance inférieure à 100 m, telle qu'une distance de l'ordre de quelques mètres ou quelques dizaines de mètres.

Par longue portée, on entend généralement une distance supérieure à 100 m, étant entendu que la liaison radioélectrique à longue portée 74 est capable de relier deux éléments, tels que le deuxième module de communication radioélectrique 68 et la passerelle 66, distants de plus de 100 m, mais que ces deux éléments ne sont pas toujours séparés d'une telle distance en pratique.

Par forte pénétration, on entend la capacité à traverser des parois épaisses avec une épaisseur de plusieurs dizaines de centimètres ou des parois ne facilitant pas la transmission d'ondes radioélectriques, telles que des parois en béton armé.

En complément facultatif, au moins un dispositif de retransmission 62 comporte en outre un connecteur électrique en forme de culot, non représenté, pour son alimentation électrique via un réseau électrique d'alimentation de source(s) de lumière.

En complément facultatif, lorsque l'installation de supervision 12 comprend également la tablette électronique 24, ladite tablette 24 est configurée pour être reliée, d'une part, au premier module de communication radioélectrique 60 via une liaison radioélectrique à courte portée 70 correspondante, et d'autre part, au deuxième module de communication radioélectrique 68 via une autre liaison radioélectrique à courte portée 70.

Chaque liaison radioélectrique à courte portée 70 est par exemple conforme à la norme IEEE 802.15.1, également appelée norme Bluetooth, de préférence encore conforme à la norme Bluetooth Low Energy, également appelée BLE ou encore Bluetooth 4.0. Les premier et deuxième modules de communication radioélectrique 60, 68, et le cas échéant, la tablette électronique 24 sont alors conformes à la norme IEEE 802.15.1, de préférence encore à la norme BLE.

En variante, chaque liaison radioélectrique à courte portée 70 est conforme à la norme IEEE 802.11, également appelée norme Wi-Fi, et les premier et deuxième modules de communication radioélectrique 60, 68, et le cas échéant, la tablette électronique 24 sont alors conformes à cette norme IEEE 802.11.

En variante encore, chaque liaison radioélectrique à courte portée 70 est de type RFID, les premier et deuxième modules de communication radioélectrique 60, 68, et le cas échéant, la tablette électronique 24 étant alors de type RFID.

En variante encore, chaque liaison radioélectrique à courte portée 70 est une liaison LPWAN (de l'anglais *Low Power Wide Area Network*), de préférence à 2,4 GHz à plus ou moins 10%. Les premier et deuxième modules de communication radioélectrique 60, 68, et le cas échéant, la tablette électronique 24 sont alors de type LPWAN. Une telle liaison LPWAN présente l'avantage d'engendrer une faible consommation électrique des premier et deuxième modules de communication radioélectrique 60, 68, et le cas échéant, de la tablette électronique 24.

La liaison radioélectrique à longue portée 74 est de préférence une liaison radioélectrique, de préférence encore une liaison radioélectrique sub-GHz, de préférence comprise entre 700 MHz et 1 GHz, de préférence encore égale à 870 MHz à plus ou moins 10%, permettant une communication à longue distance ou à haute pénétration dans le béton. Le troisième module de communication radioélectrique 72 et l'équipement qui lui est relié, tel que la passerelle 66 ou l'appareil de supervision 18, sont alors de type sub-GHz.

En variante, la liaison radioélectrique à longue portée 74 est une liaison radioélectrique à bande ultra-étroite, également appelée liaison UNB (de l'anglais *Ultra-Narrow Band*), la bande de fréquence de cette liaison présentant une largeur inférieure à 125 kHz. Le troisième module de communication radioélectrique 72 et l'équipement qui lui est relié, tel que la passerelle 66 ou l'appareil de supervision 18, sont alors de type UNB.

En variante, la liaison radioélectrique à longue portée 74 est conforme à la norme IEEE 802.11. Le troisième module de communication radioélectrique 72 et l'équipement qui lui est relié, tel que la passerelle 66 ou l'appareil de supervision 18, sont alors conformes à la norme IEEE 802.11.

En variante encore, la liaison radioélectrique 74 est une liaison LPWAN (de l'anglais *Low Power Wide Area Network*), de préférence à 2,4 GHz à plus ou moins 10%, et la liaison radioélectrique 74 est alors une liaison à forte pénétration. Le troisième module de communication radioélectrique 72 et l'équipement qui lui est relié, tel que la passerelle 66 ou l'appareil de supervision 18, sont alors de type LPWAN.

Chaque liaison radioélectrique 70, 74 est bidirectionnelle pour permettre une communication depuis chaque dispositif de détection de changement de position 16 vers l'appareil de supervision 18 ou la tablette électronique 24, et inversement pour permettre également une communication depuis l'appareil de supervision 18 vers le dispositif de détection de changement de position 16, et/ou la tablette électronique 24, et/ou le voyant lumineux et/ou encore le haut-parleur afin d'envoyer le signal généré.

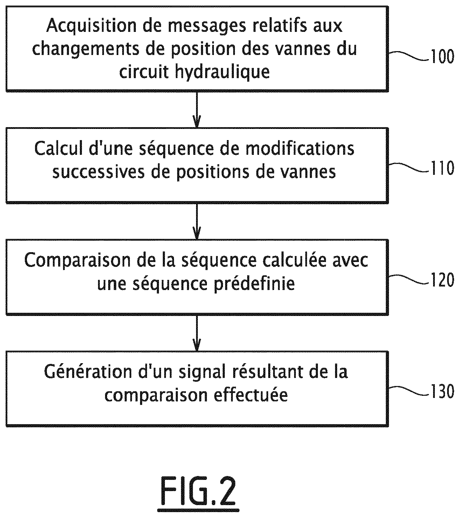

Le fonctionnement de l'installation de supervision 12 selon l'invention va être à présent décrit à l'aide de la figure 2 représentant un organigramme d'un procédé, selon l'invention, de supervision des vannes 11 du circuit hydraulique 10.

Ce procédé de supervision est apte à être mis en oeuvre par chaque appareil de supervision 18.

Lors d'une étape initiale 100, le logiciel de calcul 44 acquiert des messages émis par les différents dispositifs électroniques de détection de changement de position 16, chaque message contenant une information relative à un changement de position de la vanne 11 correspondante.

Le logiciel de calcul 44 calcule ensuite, lors de l'étape suivante 110, la séquence des modifications successives des positions de vanne 11 à partir des messages acquis, chaque message contenant non seulement l'information relative au changement de position de la vanne, mais également une date associée à chaque changement de position, permettant ainsi au logiciel de calcul 44 de définir une chronologie entre les différents changements de position.

Le logiciel de comparaison 46 compare ensuite lors de l'étape 120, la séquence calculée par le logiciel de calcul 44 avec la séquence prédéfinie, et le logiciel de génération 48 génère lors de l'étape 130 un signal résultant de la comparaison effectuée lors de l'étape 120, c'est-à-dire un signal fonction de la comparaison entre la séquence calculée et la séquence prédéfinie.

En cas de détection d'un écart entre la séquence calculée et la séquence prédéfinie, le signal généré par le logiciel de génération 48 est un signal d'alerte, afin de prévenir l'opérateur de cet incident, et qu'il puisse alors le corriger rapidement.

Le logiciel de génération 48 est également apte à générer lors de cette étape 130, un signal de manœuvre indiquant la prochaine manœuvre à effectuer par l'opérateur, c'est-à-dire la prochaine vanne 11 à manœuvrer selon la séquence prédéfinie. Autrement dit, le logiciel de génération 48 est configuré pour prédire la prochaine vanne 11 à manœuvrer en fonction de la comparaison effectuée par le logiciel de comparaison 46 entre la séquence calculée et la séquence prédéfinie.

Comme indiqué précédemment, différents moyens complémentaires sont envisagés pour informer l'opérateur du signal généré. Les signaux générés sont par exemple affichés sur la tablette électronique 24 et/ou sur le dispositif de détection de changement de position 16 associé à la vanne 11 correspondant au signal.

En variante ou en complément facultatif, lorsque l'installation de supervision 12 comprend au moins un voyant lumineux ou au moins un haut-parleur, l'opérateur est informé du signal généré sous forme d'un signal lumineux émis par ledit voyant et/ou sous forme d'un signal sonore émis par ledit haut-parleur.

On conçoit ainsi que l'installation de supervision 12 et le procédé de supervision selon l'invention permettent d'améliorer la supervision du circuit hydraulique 10, en limitant les risques d'incident lors de manœuvres des vannes 11 par des opérateurs, via la génération du ou des signaux, le signal d'alerte visant à informer l'opérateur de la détection d'un écart entre la séquence effectuée des modifications successives de positions de vannes et la séquence prédéfinie, et un signal de manœuvre visant à lui indiquer plus facilement la prochaine vanne à manœuvrer afin de limiter le risque d'erreur.

## Revendications

1. Installation électronique (12) de supervision de vannes (11) d'un circuit hydraulique (10), chaque vanne (11) étant mobile entre une position ouverte et une position fermée, l'installation (12) comprenant :
- une pluralité de dispositifs électroniques de détection de changement de position (16), chacun étant associé à une vanne (11) respective et étant configuré pour détecter un changement de position de la vanne (11) entre sa position ouverte et sa position fermée,
- un appareil électronique (18) de supervision des vannes (11) du circuit hydraulique (10), et
- un système (20) de transmission radioélectrique de messages entre chaque dispositif de détection de changement de position (16) et l'appareil de supervision (18),
**caractérisée en ce que** l'appareil de supervision (18) est configuré pour calculer une séquence de modifications successives de positions de vannes (11) à partir de messages reçus des dispositifs de détection de changement de position (16) via le système de transmission radioélectrique (20), pour comparer la séquence calculée avec une séquence prédéfinie et pour générer un signal en fonction de la comparaison entre la séquence calculée et la séquence prédéfinie, et
**en ce que** le signal généré est un signal d'alerte en cas de détection d'un écart entre la séquence calculée et la séquence prédéfinie.

2. Installation (12) selon la revendication 1, dans laquelle un signal de manœuvre indiquant la prochaine vanne (11) à manœuvrer selon la séquence prédéfinie est généré.

3. Installation (12) selon l'une quelconque des revendications précédentes, dans laquelle l'appareil de supervision (18) est configuré en outre pour déterminer la vanne (11) correspondant au signal généré.

4. Installation (12) selon la revendication 3, dans laquelle l'appareil de supervision (18) est configuré en outre pour transmettre, via le système de transmission radioélectrique (20), le signal généré au dispositif de détection de changement de position (16) associé à la vanne (11) correspondant au signal.

5. Installation (12) selon la revendication 3 ou 4, dans laquelle l'installation (12) comprend en outre une tablette électronique (24), et l'appareil de supervision (18) est configuré en outre pour transmettre, via le système de transmission radioélectrique (20), le signal généré à la tablette électronique (24).

6. Installation (12) selon l'une quelconque des revendications 3 à 5, dans laquelle l'installation (12) comprend en outre au moins un voyant lumineux, chaque voyant lumineux étant associé à une vanne (11) correspondante, et l'appareil de supervision (18) est configuré en outre pour transmettre, via le système de transmission radioélectrique (20) et au voyant lumineux associé à la vanne (11) correspondant au signal généré, un signal de commande pour la génération par ledit voyant d'un signal lumineux.

7. Installation (12) selon l'une quelconque des revendications 3 à 6, dans laquelle l'installation (12) comprend en outre au moins un haut-parleur, chaque haut-parleur étant associé à une vanne (11) correspondante, et l'appareil de supervision (18) est configuré en outre pour transmettre, via le système de transmission radioélectrique (20) et au haut-parleur associé à la vanne (11) correspondant au signal généré, un signal de commande pour la génération par ledit haut-parleur d'un signal sonore.

8. Installation (12) selon l'une quelconque des revendications précédentes, dans laquelle chaque vanne (11) est mobile en rotation autour d'un axe de rotation (X) entre la position ouverte et la position fermée, et
dans laquelle chaque dispositif de détection de changement de position (16) comporte un accéléromètre (26) adapté pour détecter une accélération angulaire de la vanne (11) autour de l'axe de rotation (X).

9. Installation (12) selon la revendication 8, dans laquelle chaque dispositif de détection de changement de position (16) comporte en outre un module d'alimentation électrique (28) et un module de calcul (30) adapté pour déterminer un changement de position de la vanne (11) en fonction d'une accélération angulaire détectée par l'accéléromètre (26), et
dans laquelle le module d'alimentation électrique (28) est configuré pour alimenter électriquement le module de calcul (30) seulement en cas de détection d'une accélération angulaire par l'accéléromètre (26).

10. Installation (12) selon l'une quelconque des revendications précédentes, dans laquelle le système de transmission radioélectrique (20) comporte :
- une pluralité de premiers modules de communication radioélectrique (60) à courte portée, chacun étant associé à un dispositif de détection de changement de position (16) respectif, et
- au moins un dispositif (62) de retransmission radioélectrique de messages entre chaque premier module de communication radioélectrique (60) et l'appareil de supervision (18), chaque dispositif de retransmission (62) comportant :
+ un deuxième module de communication radioélectrique (68) à courte portée, configuré pour communiquer avec chaque premier module de communication radioélectrique (60), et
+ un troisième module de communication radioélectrique (72) à longue portée, configuré pour communiquer avec l'appareil de supervision (18).

11. Installation (12) selon la revendication 10, dans laquelle au moins un dispositif de retransmission (62) comporte en outre un connecteur électrique en forme de culot, pour son alimentation électrique via un réseau électrique d'alimentation de source(s) de lumière.

12. Installation (12) selon la revendication 10 ou 11, dans laquelle chaque troisième module de communication radioélectrique (72) à longue portée est configuré pour émettre et/ou recevoir des signaux à une fréquence inférieure à 1 GHz, de préférence comprise entre 700 MHz et 1 GHz, de préférence encore égale à 870 MHz à plus ou moins 10%.

13. Circuit hydraulique (10) comprenant une pluralité de vannes (11) et une installation (12) de supervision des vannes (11), chaque vanne (11) étant mobile entre une position ouverte et une position fermée, **caractérisé en ce que** l'installation (12) est conforme à l'une quelconque des revendications précédentes.

14. Procédé de supervision de vannes (11) d'un circuit hydraulique (10), chaque vanne (11) étant mobile entre une position ouverte et une position fermée,
le procédé étant mis en œuvre par ordinateur et comprenant l'étape suivante :
- acquérir (100) des messages émis par des dispositifs électroniques de détection de changement de position (16), chaque dispositif de détection de changement de position (16) étant associé à une vanne respective (11) et étant configuré pour détecter un changement de position de la vanne (11) entre sa position ouverte et sa position fermée, chaque message contenant une information relative à la position de la vanne (11) correspondante,
**caractérisé en ce qu'**il comprend en outre les étapes suivantes :
- calculer (110) une séquence de modifications successives de positions de vannes (11) à partir des messages acquis,
- comparer (120) la séquence calculée avec une séquence prédéfinie, et
- générer (130) un signal en fonction de la comparaison entre la séquence calculée et la séquence prédéfinie, le signal généré étant un signal d'alerte en cas de détection d'un écart entre la séquence calculée et la séquence prédéfinie.

15. Produit programme d'ordinateur comportant des instructions logicielles, qui lorsqu'elles sont exécutées par un ordinateur, mettent en œuvre un procédé de supervision selon la revendication précédente.

## Patentansprüche

1. Elektronische Anlage (12) zur Überwachung von Ventilen (11) eines Hydraulikkreises (10), wobei jedes Ventil (11) zwischen einer Offen-Stellung und einer Geschlossen-Stellung bewegbar ist, die Anlage (12) aufweisend:
- eine Mehrzahl von elektronischen Einrichtungen zur Detektion einer Stellungsänderung (16), wobei jede davon mit einem jeweiligen Ventil (11) assoziiert ist und dazu eingerichtet ist, eine Stellungsveränderung des Ventils (11) zwischen dessen Offen-Stellung und dessen Geschlossen-Stellung zu detektieren,
- eine elektronische Vorrichtung (18) zur Überwachung der Ventile (11) des Hydraulikkreises (10), und
- ein System (20) zur Funkübertragung von Nachrichten zwischen jeder Einrichtung zur Detektion der Stellungsänderung (16) und der Vorrichtung zur Überwachung (18),
**gekennzeichnet dadurch, dass** die Vorrichtung zur Überwachung (18) dazu eingerichtet ist, eine Sequenz von aufeinanderfolgenden Änderungen der Stellungen der Ventile (11) ausgehend von Nachrichten, welche von den Einrichtungen zur Detektion der Stellungsänderung(16) über das System (20) zur Funkübertragung empfangen werden, zu berechnen, um die berechnete Sequenz mit einer vordefinierten Sequenz zu vergleichen und um ein Signal in Abhängigkeit von dem Vergleich zwischen der berechneten Sequenz und der vordefinierten Sequenz zu erzeugen, und
dadurch, dass das erzeugte Signal im Fall einer Detektion eines Unterschieds zwischen der berechneten Sequenz und der vordefinierten Sequenz ein Warnsignal ist.

2. Anlage (12) nach dem Anspruch 1, wobei ein Betätigungssignal, welches das nächste gemäß der vordefinierten Sequenz zu betätigende Ventil (11) angibt, erzeugt wird.

3. Anlage (12) nach irgendeinem der vorstehenden Ansprüche, wobei die Vorrichtung zur Überwachung (18) ferner dazu eingerichtet ist, das Ventil (11), welches zu dem erzeugten Signal gehört, zu ermitteln.

4. Anlage (12) nach dem Anspruch 3, wobei die Vorrichtung zur Überwachung (18) ferner dazu eingerichtet ist, das erzeugte Signal über das System zur Funkübertragung (20) an eine Einrichtung zur Detektion der Stellungsänderung (16), welche mit dem zu dem erzeugten Signal gehörenden Ventil (11) assoziiert ist, zu senden.

5. Anlage (12) nach dem Anspruch 3 oder 4, wobei die Anlage (12) ferner ein elektronisches Tablet (24) aufweist, und die Vorrichtung zur Überwachung (18) ferner dazu eingerichtet ist, das erzeugte Signal über das System zur Funkübertragung (20) an das elektronische Tablet (24) zu senden.

6. Anlage (12) nach irgendeinem der Ansprüche 3 bis 5, wobei die Anlage (12) ferner mindestens eine Anzeigeleuchte aufweist, wobei jede Anzeigeleuchte mit einem zugehörigen Ventil (11) assoziiert ist, und die Vorrichtung zur Überwachung (18) ferner dazu eingerichtet ist, über das System zur Funkübertragung (20) und an die Anzeigeleuchte, welche mit dem zu dem erzeugten Signal gehörenden Ventil (11) assoziiert ist, ein Steuersignal für die Erzeugung, mittels der Leuchte, eines Lichtsignals zu senden.

7. Anlage (12) nach irgendeinem der Ansprüche 3 bis 6, wobei die Anlage (12) ferner mindestens einen Lautsprecher aufweist, wobei jeder Lautsprecher mit einem zugehörigen Ventil (11) assoziiert ist, und die Vorrichtung zur Überwachung (18) ferner dazu eingerichtet ist, über das System zur Funkübertragung (20) und an den Lautsprecher, welcher mit dem zu dem erzeugten Signal gehörenden Ventil (11) assoziiert ist, ein Steuersignal für die Erzeugung, mittels des Lautsprechers, eines Tonsignals zu senden.

8. Anlage (12) nach irgendeinem der vorstehenden Ansprüche, wobei jedes Ventil (11) um eine Drehachse (X) zwischen der Offen-Stellung und der Geschlossen-Stellung drehbewegbar ist, und
wobei jede Einrichtung zur Detektion der Stellungsänderung (16) einen Beschleunigungsmesser (26) aufweist, welcher dazu eingerichtet ist, eine Winkelbeschleunigung des Ventils (11) um die Drehachse (X) herum zu detektieren.

9. Anlage (12) nach Anspruch 8, wobei jede Einrichtung zur Detektion der Stellungsänderung (16) ferner ein Modul zur elektrischen Energieversorgung (28) und ein Berechnungsmodul (30), welches dazu eingerichtet ist, eine Änderung der Stellung des Ventils (11) in Abhängigkeit von einer durch den Beschleunigungsmesser (26) detektierten Winkelbeschleunigung zu ermitteln, aufweist, und
wobei das Modul zur elektrischen Energieversorgung (28) dazu eingerichtet ist, das Berechnungsmodul (30) nur im Falle einer Detektion einer Winkelbeschleunigung durch den Beschleunigungsmesser (26) mit Elektrizität zu versorgen.

10. Anlage (12) nach irgendeinem der vorstehenden Ansprüche, wobei das System zur Funkübertragung (20) aufweist:
- eine Mehrzahl von ersten Modulen zur Funkkommunikation (60) mit kurzer Reichweite, von denen jedes mit einer jeweiligen Einrichtung zur Detektion der Stellungsänderung (16) assoziiert ist, und
- mindestens eine Einrichtung (62) zur Funkweiterleitung von Nachrichten zwischen jedem ersten Modul zur Funkkommunikation (60) und der Vorrichtung zur Überwachung (18), wobei jede Einrichtung zur Weiterleitung (62) aufweist:
+ ein zweites Modul zur Funkkommunikation (68) mit kurzer Reichweite, welches dazu eingerichtet ist, mit jedem ersten Modul zur Funkkommunikation (60) zu kommunizieren, und
+ ein drittes Modul zur Funkkommunikation (72) mit großer Reichweite, welches dazu eingerichtet ist, mit der Vorrichtung zur Überwachung (18) zu kommunizieren.

11. Anlage (12) nach Anspruch 10, wobei mindestens eine Einrichtung zur Weiterleitung (62) ferner einen elektrischen Anschluss in Form eines Sockels für deren elektrischen Stromversorgung über ein elektrisches Netz zur Versorgung einer (von) Lichtquelle(n) aufweist.

12. Anlage (12) nach Anspruch 10 oder 11, wobei jedes dritte Modul zur Funkkommunikation (72) mit großer Reichweite dazu eingerichtet ist, Signale mit einer Frequenz kleiner 1 GHz, bevorzugt zwischen 700 MHz und 1 GHz, bevorzugter gleich 870 MHz plus oder minus 10%, auszusenden und/oder zu empfangen.

13. Hydraulikkreis (10), aufweisend eine Mehrzahl von Ventilen (11) und eine Anlage (12) zur Überwachung von Ventilen (11), wobei jedes Ventil (11) zwischen einer Offen-Stellung und einer Geschlossen-Stellung bewegbar ist, **gekennzeichnet dadurch, dass** die Anlage (12) irgendeinem der vorstehenden Ansprüche entspricht.

14. Verfahren zur Überwachung von Ventilen (11) eines Hydraulikkreises (10), wobei jedes Ventil (11) zwischen einer Offen-Stellung und einer Geschlossen-Stellung bewegbar ist,
wobei das Verfahren mittels eines Computers ausgeführt wird und den folgenden Schritt aufweist:
- Erlangen (100) von Nachrichten, welche durch elektronische Einrichtungen zur Detektion einer Stellungsänderung (16) ausgesendet werden, wobei jede Einrichtung zur Detektion einer Stellungsänderung (16) mit einem jeweiligen Ventil (11) assoziiert ist und dazu eingerichtet ist, eine Stellungsveränderung des Ventils (11) zwischen dessen Offen-Stellung und dessen Geschlossen-Stellung zu detektieren, wobei jede Nachricht eine Information bezüglich der Stellung des zugehörigen Ventils (11) aufweist,
**gekennzeichnet dadurch, dass** es ferner die folgenden Schritte aufweist:
- Berechnen (110) einer Sequenz von aufeinanderfolgenden Änderungen der Stellungen der Ventile (11) ausgehend von erlangten Nachrichten,
- Vergleichen (120) der berechneten Sequenz mit einer vordefinierten Sequenz, und
- Erzeugen (130) eines Signals in Abhängigkeit von dem Vergleich zwischen der berechneten Sequenz und der vordefinierten Sequenz, wobei das erzeugte Signal im Fall einer Detektion eines Unterschieds zwischen der berechneten Sequenz und der vordefinierten Sequenz ein Warnsignal ist.

15. Computerprogrammprodukt, aufweisend logische Instruktionen, die bei ihrer Ausführung durch einen Computer ein Verfahren zur Überwachung gemäß dem vorstehenden Anspruch ausführen.

## Claims

1. Electronic equipment (12) for supervising valves (11) of a hydraulic circuit (10), each valve (11) being movable between an open position and a closed position, the equipment (12) comprising :
- a plurality of electronic devices for detecting changes in position (16), each being associated with a respective valve (11) and being configured to detect a change of position of the valve (11) between its open position and its closed position,
- an electronic apparatus (18) for supervising the valves (11) of the hydraulic circuit (10), and
- a system (20) for radio transmission of messages between each device for detecting changes in position (16) and the supervisory apparatus (18),
**characterized in that** the supervisory apparatus (18) is configured to calculate a sequence of successive changes of valve positions (11) from messages received from the devices for detecting changes in position (16) via the radio transmission system (20), to compare the calculated sequence with a predefined sequence, and to generate a signal based on the comparison between the calculated sequence and the predefined sequence, and
**in that** the generated signal is a warning signal when a difference is detected between the calculated sequence and the predefined sequence.

2. Equipment (12) according to claim 1, wherein an operating signal indicating the next valve (11) to be operated according to the predefined sequence is generated .

3. Equipment (12) according to any one of the preceding claims, wherein the supervisory apparatus (18) is further configured to identify the valve (11) corresponding to the generated signal.

4. Equipment (12) according to claim 3, wherein the supervisory apparatus (18) is further configured to transmit the generated signal, via the radio transmission system (20), to the device for detecting changes in position (16) associated with the valve (11) corresponding to the signal.

5. Equipment (12) according to claim 3 or 4, wherein the equipment (12) further comprises an electronic tablet (24), and the supervisory apparatus (18) is further configured to transmit the generated signal to the electronic tablet (24) via the radio transmission system (20).

6. Equipment (12) according to any one of the claims 3 to 5, wherein the equipment (12) further comprises at least one indicator light, each indicator light being associated with a corresponding valve (11), and the supervisory apparatus (18) is further configured to transmit a control signal for the generation by the indicator of a light signal via the radio transmission system (20) to the indicator light associated with the valve (11) corresponding to the generated signal.

7. Equipment (12) according to any one of the claims 3 to 6, wherein the equipment (12) further comprises at least one loudspeaker, each loudspeaker being associated with a corresponding valve (11), and the supervisory apparatus (18) is further configured to transmit, via the radio transmission system (20) and to the loudspeaker associated with the valve (11) corresponding to the generated signal, a control signal for the generation by the loudspeaker of a sound signal.

8. Equipment (12) according to any one of the preceding claims, wherein each valve (11) is rotatable about an axis of rotation (X) between the open position and the closed position, and
wherein each device for detecting changes in position (16) comprises an accelerometer (26) adapted to detect angular acceleration of the valve (11) about the axis of rotation (X).

9. Equipment (12) according to claim 8, wherein each device for detecting changes in position (16) further comprises a power supply module (28) and a calculation module (30) configured to identify a change in the position of the valve (11) as a function of an angular acceleration detected by the accelerometer (26), and
wherein the power supply module (28) is configured to electrically power the calculation module (30) only upon detection of an angular acceleration by the accelerometer (26).

10. Equipment (12) according to any one of the preceding claims, wherein the radio transmission system (20) comprises:
- a plurality of first short range radio communication modules (60), each being associated with a respective device for detecting changes in position (16), and
- at least one device (62) for radio retransmission of messages between each first radio communication module (60) and the supervisory apparatus (18), each retransmission device (62) comprising:
+ a second short-range radio communication module (68) configured to communicate with each first radio communication module (60), and
+ a third long-range radio communication module (72) configured to communicate with the supervisory apparatus (18).

11. Equipment (12) according to claim 10, wherein at least one retransmission device (62) further comprises a base-shaped electrical connector for its power supply via a power supply network of light sources.

12. Equipment (12) according to claim 10 or 11, wherein each third long-range radio communication module (72) is configured to transmit and/or receive signals at a frequency less than 1 GHz, preferably between 700 MHz and 1 GHz, more preferably equal to 870 MHz plus or minus 10%.

13. Hydraulic circuit (10) comprising a plurality of valves (11) and equipment (12) for supervising the valves (11), each valve (11) being movable between an open position and a closed position, **characterized in that** the equipment (12) is according to any one of the preceding claims.

14. Method for supervising valves (11) of a hydraulic circuit (10), each valve (11) being movable between an open position and a closed position,
the method being implemented by computer and comprising the following step:
- acquiring (100) messages transmitted by electronic devices for detecting changes in position (16), each device for detecting changes in position (16) being associated with a respective valve (11) and being configured to detect a change of position of the valve (11) between its open position and its closed position, each message containing information relating to the position of the corresponding valve (11), **characterized in that** it further comprises the following steps:
- calculating (110) a sequence of successive modifications of valve positions (11) from the acquired messages,
- comparing (120) the calculated sequence with a predefined sequence, and
- generating (130) a signal as a function of the comparison between the calculated sequence and the predefined sequence, the generated signal being a warning signal when a difference is detected between the calculated sequence and the predefined sequence.

15. Computer program product comprising software instructions, which, when executed by a computer, implement a supervisory method according to the preceding claim.
